# EUROPEAN PATENT SPECIFICATION

(11) **EP 2 461 109 B1**
(45) Date of publication and mention of the grant of the patent: **01.03.2017**
(21) Application number: 11191755.5
(22) Date of filing: 02.12.2011
(51) Int. Cl.: F24D 17/02, F24D 19/10, F24F 5/00, F25B 25/00

(54) **Cold/hot water supply apparatus**
Warm-/Kaltwasserversorgungsvorrichtung
Appareil d'alimentation d'eau chaude/froide

(30) Priority: 02.12.2010 JP 2010268984
(43) Date of publication of application: 06.06.2012
(73) Proprietor: Panasonic Corporation, Kadoma-shi Osaka 571-8501 (JP)
(72) Inventor: Isayama, Yasuhiko, Chuo-ku, OSAKA, 540-6207 (JP); Aoyama, Shigeo, Chuo-ku, OSAKA, 540-6207 (JP)
(74) Representative: Eisenführ Speiser

(56) References cited:
- EP-A1- 2 103 883
- EP-A1- 2 395 302
- EP-A2- 1 113 233
- JP-A- S58 124 133
- US-B1- 6 405 551

## Description

### [Technical Field]

The present invention relates to a cold/hot water supply apparatus for carrying out air conditioning in an indoor space using a heat pump and for accumulating heat in a heat accumulator tank.

### [Background Technique]

There is a conventionally known cold/hot water supply apparatus having a cooling operation mode for cooling an indoor space and a heat-accumulation operation mode for heating a heat accumulator tank (see patent document 1 for example).

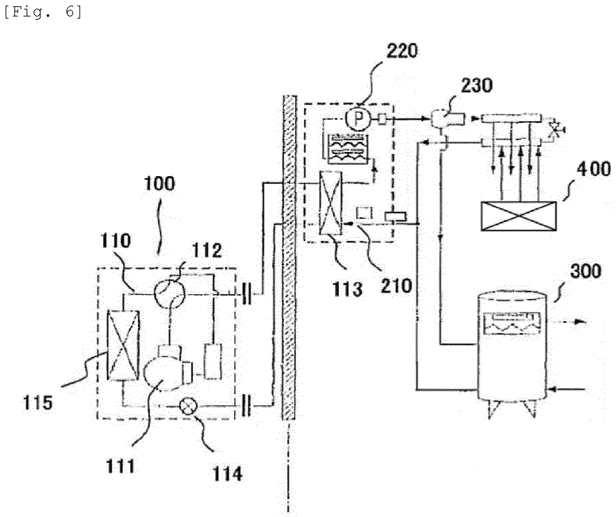

Fig. 6 shows a refrigeration cycle apparatus 100 which carries out an air conditioning operation in an indoor space and accumulates heat in a heat accumulator tank 300.

The refrigeration cycle apparatus 100 includes a refrigerant circuit 110 through which refrigerant circulates, a compressor 111, a four-way valve 112, a first heat exchanger 113, expansion means 114 and a air convection body heat exchanger 115, and these members are annularly connected to one another through pipes.

The first heat exchanger 113 includes a refrigerant circuit 110 and a fluid circuit 210. The fluid circuit 210 includes a first heat exchanger 113, circulation means 220 and a fluid path-switching valve 230. Fluid flowing through the fluid circuit 210 flows to a third heat exchanger 400 or a heat accumulator tank 300 by switching operation of the fluid path-switching valve 230. The third heat exchanger 400 is a fan coil unit having a heat exchanger and a blast fan.

In the case of the cooling operation mode, low temperature fluid is produced in the first heat exchanger 113. This low temperature fluid flows to the third heat exchanger 400 through the fluid path-switching valve 230, absorbs heat from the indoor space by the third heat exchanger 400, cools the indoor space and then, returns into the first heat exchanger 113.

In the case of the heat-accumulation operation mode, the refrigeration cycle apparatus 100 switches the four-way valve 112. According to this, the refrigerant flows in the opposite direction from the cooling operation mode. Therefore, in the case of the heat-accumulation operation mode, high temperature fluid is produced in the first heat exchanger 113. This high temperature fluid flows to the heat accumulator tank 300 through the fluid path-switching valve 230, dissipates heat in the heat accumulator tank 300 and then, returns to the first heat exchanger 113. Hot water heated in the heat accumulator tank 300 is supplied.

The cooling operation mode is switched to the heat-accumulation operation mode and the heat-accumulation operation mode is switched to the cooling operation mode by switching the fluid path-switching valve 230.

The low temperature fluid and the high temperature fluid produced by the first heat exchanger 113 are conveyed by switching the fluid path-switching valve 230.

That is, by switching the fluid path-switching valve 230, fluid which flows out of the first heat exchanger 113 cools an indoor space in the case of the cooling operation mode, and heats water in the heat accumulator tank 300 in the case of the heat-accumulation operation mode.

Patent document 2 discloses a cold/hot water supply according to the preamble of claim 1.

### [Prior Art Document]

### [Patent Document]

[Patent Document 1] Specification of EPC Patent Application Publication No.2204620
[Patent Document 2] EP patent application 2 103 883

### [Summary of the Invention]

### [Problem to be Solved by the Invention]

According to the conventional configuration, however, when the heat-accumulation operation mode is switched to the cooling operation mode, high temperature fluid accumulated between the first heat exchanger 113 and the fluid path-switching valve 230 flows into the third heat exchanger 400. Therefore, there is a problem that since the high temperature fluid dissipates heat in an indoor space, the temperature in the indoor space rises and comfort in the indoor space is deteriorated.

The present invention has been accomplished to solve the conventional problem, and it is an object of the invention to provide a cold/hot water supply apparatus capable of suppressing temperature rise in an indoor space when the heat-accumulation operation mode is switched to the cooling operation mode, and capable of cooling the indoor space immediately after the heat-accumulation operation mode is switched to the cooling operation mode.

### [Means for Solving the Problem]

To solve the conventional problem, the present invention provides a cold/hot water supply apparatus comprising: a refrigerant circuit including a compressor, a first heat exchanger, expansion means and a second heat exchanger which are annularly connected to one another and through which refrigerant flows; a fluid circuit including the first heat exchanger and a third heat exchanger which are annularly connected to each other and through which fluid flows; a heat accumulator tank in which water is stored; a first switching pipe which is connected to the third heat exchanger in parallel, and which exchanges heat between the fluid and water in the heat accumulator tank; and a control apparatus which switches between a flow of the fluid to the third heat exchanger and a flow of the fluid to the heat accumulator tank; in which the cold/hot water supply apparatus has a heat-accumulation operation mode and a cooling operation mode, in the heat-accumulation operation mode, the fluid flows to the first switching pipe, thereby heating the water in the heat accumulator tank, and in the cooling operation mode, the fluid flows to the third heat exchanger, thereby absorbing heat in air, wherein the cold/hot water supply apparatus also includes: a temperature sensor which detects temperature of the fluid; and a second switching pipe which is connected to the third heat exchanger in parallel and which is connected to the first switching pipe in parallel, the fluid flowing through the second switching pipe; and when the heat-accumulation operation mode is changed to the cooling operation mode, the control apparatus determines whether the fluid which flows out of the first heat exchanger should be made to flow to the second switching pipe or to the third heat exchanger based on temperature of the fluid detected by the temperature sensor.

### [Effect of the Invention]

According to the present invention, when the heat-accumulation operation mode is switched to the cooling operation mode, it is possible to suppress the temperature rise in an indoor space, and to cool the indoor space immediately after the heat-accumulation operation mode is switched to the cooling operation mode.

### [Brief Description of the Drawings]

Fig. 1 is a schematic explanatory diagram (heat-accumulation operation mode) of a fluid circuit of a cold/hot water supply apparatus according to a first embodiment of the present invention;
Fig. 2 is a schematic explanatory diagram (when heat-accumulation operation mode is switched to cooling operation mode) of the fluid circuit of the cold/hot water supply apparatus;
Fig. 3 is a schematic explanatory diagram (cooling operation mode) of the fluid circuit of the cold/hot water supply apparatus;
Fig. 4 is a flowchart of a driving operation of the cold/hot water supply apparatus;
Fig. 5 is a schematic explanatory diagram of a fluid circuit of a cold/hot water supply apparatus according to a second embodiment of the invention; and
Fig. 6 is a schematic block diagram of a conventional cold/hot water supply apparatus.

### [Explanation of Symbols]

- 2: refrigerant circuit
- 4: control apparatus
- 5: fluid circuit
- 10: cold/hot water supply apparatus
- 21: compressor
- 22: first heat exchanger
- 23: expansion means
- 24: second heat exchanger
- 53: third heat exchanger
- 54: circulation means
- 55: heat accumulator tank
- 60: first fluid path-switching valve
- 61: second fluid path-switching valve
- 62: first switching pipe
- 63: second switching pipe
- 70: temperature sensor

### [Mode for Carrying Out the Invention]

According to a first aspect of the invention, the cold/hot water supply apparatus also includes: a temperature sensor which detects temperature of the fluid; and a second switching pipe which is connected to the third heat exchanger in parallel and which is connected to the first switching pipe in parallel, the fluid flowing through the second switching pipe; and when the heat-accumulation operation mode is changed to the cooling operation mode, the control apparatus determines whether the fluid which flows out of the first heat exchanger should be made to flow to the second switching pipe or to the third heat exchanger based on temperature of the fluid detected by the temperature sensor.

According to this, when the heat-accumulation operation mode is changed to the cooling operation mode, it is possible to select whether fluid should be made to flow to the second switching pipe or the third heat exchanger depending upon temperature.

According to a second aspect, in the cold/hot water supply apparatus of the first aspect, when the heat-accumulation operation mode is changed to the cooling operation mode, if temperature of the fluid detected by the temperature sensor is equal to or higher than predetermined temperature, the control apparatus determines to flow, to the second switching pipe, the fluid which flows from the first heat exchanger.

According to this, when the heat-accumulation operation mode is switched to the cooling operation mode, if fluid temperature detected by the temperature sensor is equal to or higher than the predetermined temperature, the switching pipe is switched to the second switching pipe, and the high temperature fluid is circulated until it is cooled to the predetermined temperature by the first heat exchanger. Therefore, the high temperature fluid does not flow into the third heat exchanger and the temperature rise in the indoor space can be suppressed.

According to a third aspect, in the cold/hot water supply apparatus of the first aspect, when the heat-accumulation operation mode is changed to the cooling operation mode, if temperature of the fluid detected by the temperature sensor is lower than predetermined temperature, the control apparatus determines to flow, to the third heat exchanger, the fluid which flows from the first heat exchanger.

According to this, when the heat-accumulation operation mode is switched to the cooling operation mode, if the fluid temperature detected by the temperature sensor in the first heat exchanger is lower than the predetermined temperature, control is performed such that the heat exchanger is switched to the third heat exchanger. According to this, fluid lower than the predetermined temperature flows into the third heat exchanger and heat is absorbed from the indoor space through the third heat exchanger. Therefore, it is possible to cool the indoor space immediately after the heat-accumulation operation mode is switched to the cooling operation mode.

According to a fourth aspect, the cold/hot water supply apparatus of the second or third aspect further comprises an air temperature sensor which detects air temperature in an indoor space where the third heat exchanger is disposed, wherein the predetermined temperature is set based on temperature detected by the air temperature sensor.

According to this, when air temperature in the indoor space is high, the operation mode is switched from a cooling-standby operation to the cooling operation mode at an early stage as compared with a case where the predetermined temperature is fixed, and cooling-standby time can be shortened. Therefore, it is possible to enhance the energy efficiency.

Embodiments of the present invention will be described with reference to the drawings. The invention is not limited to the embodiments.

### (First Embodiment)

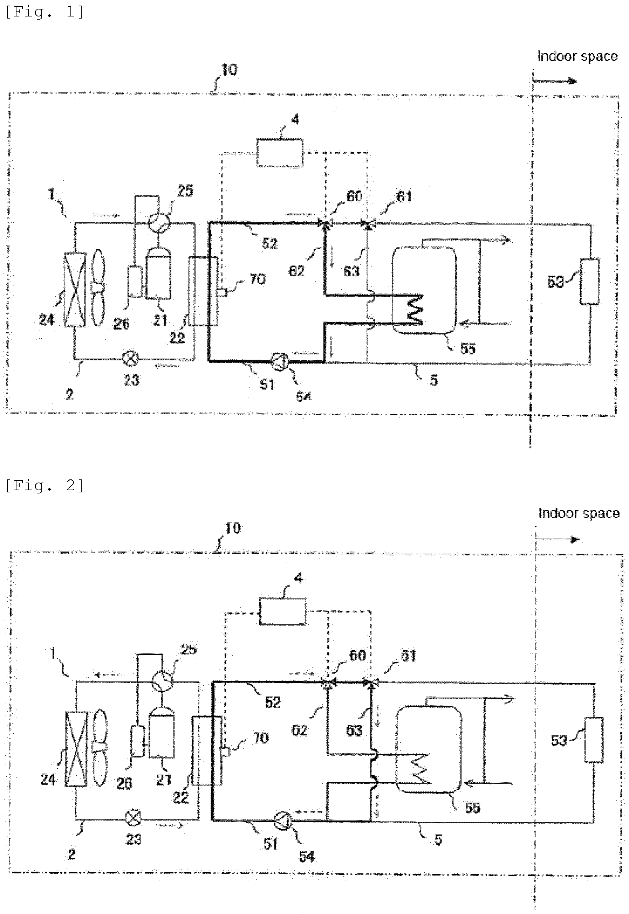

A cold/hot water supply apparatus according to a first embodiment of the present invention will be described using Figs. 1 to 4.

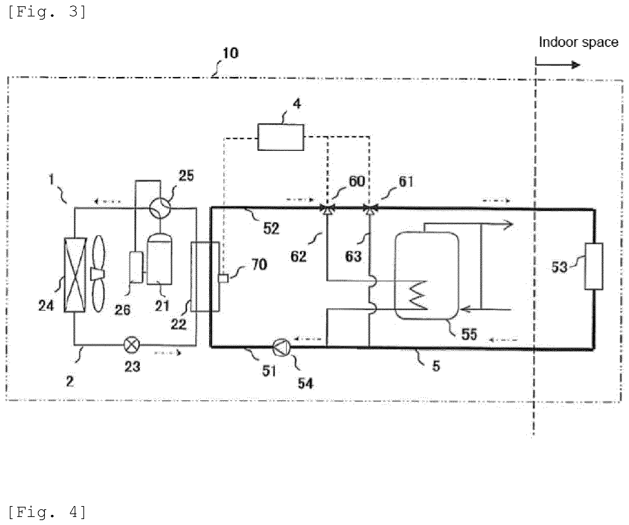

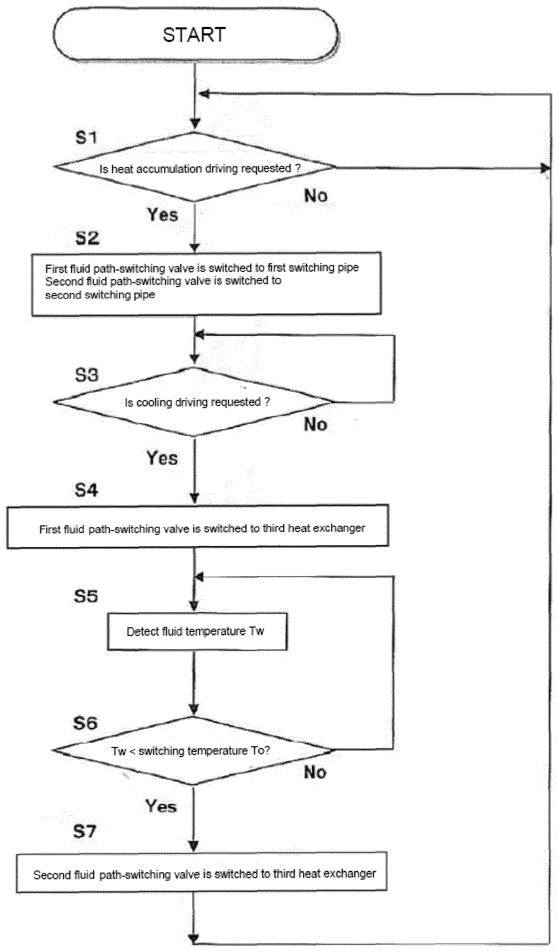

Figs. 1 to 3 are schematic block diagrams of the cold/hot water supply apparatus of the embodiment. Fig. 1 is a schematic block diagram showing a flow of fluid in a heat-accumulation operation mode, Fig. 2 is a schematic block diagram showing a flow of fluid when the heat-accumulation operation mode is switched to a cooling operation mode, Fig. 3 is a schematic block diagram showing a flow of fluid in the cooling operation mode, and Fig. 4 is a flowchart of a driving operation of the cold/hot water supply apparatus of the embodiment.

A configuration of the cold/hot water supply apparatus of the embodiment will be described using Fig. 1.

The cold/hot water supply apparatus 10 includes a refrigeration cycle apparatus 1, a fluid circuit 5, a third heat exchanger 53 and a heat accumulator tank 55.

The refrigeration cycle apparatus 1 includes a refrigerant circuit 2 through which refrigerant circulates. As the refrigerant, it is possible to use pseudo-azeotropic mixture refrigerant such as R410A and single refrigerant such as R32.

The refrigerant circuit 2 includes a compressor 21, a first heat exchanger 22, an expansion means 23 and a second heat exchanger 24 and these members are annularly connected to one another through pipes. The first heat exchanger 22 exchanges heat between refrigerant and fluid. An expansion valve or a capillary tube is used as the expansion means 23. The second heat exchanger 24 exchanges heat between refrigerant and air.

In this embodiment, an accumulator 26 which separates gas and liquid from each other is provided in an inflow side pipe of the compressor 21. In the heat-accumulation operation mode, the heat accumulator tank 55 is heated. In the cooling operation mode, the third heat exchanger 53 absorbs heat. The refrigerant circuit 2 is provided with a four-way valve 25 which switches between the heat-accumulation operation mode and the cooling operation mode.

In this embodiment, the refrigeration cycle apparatus 1 configures a low temperature water producing apparatus. This low temperature water producing apparatus utilizes low temperature fluid produced by the first heat exchanger 22 for absorbing heat by the third heat exchanger 53, and utilizes high temperature fluid produced by the first heat exchanger 22 for heating the heat accumulator tank 55. The first heat exchanger 22 exchanges heat between refrigerant and fluid.

The fluid circuit 5 includes the first heat exchanger 22 and the third heat exchanger 53, and these exchangers are annularly connected to each other through pipes. Fluid flows through the fluid circuit 5. The fluid is water or antifreeze. The third heat exchanger 53 is disposed in an indoor space, and cools and heats the indoor space.

An inflow pipe 51 is a pipe extending from the third heat exchanger 53 to the first heat exchanger 22, and an outflow pipe 52 is a pipe extending from the first heat exchanger 22 to the third heat exchanger 53.

The outflow pipe 52 is provided with a first fluid path-switching valve 60 and a second fluid path-switching valve 61. The inflow pipe 51 is provided with circulation means 54.

A first switching pipe 62 branches off from the first fluid path-switching valve 60 and is connected to the inflow pipe 51 through the heat accumulator tank 55. That is, the first switching pipe 62 is connected to the third heat exchanger 53 in parallel, and exchanges heat between fluid and water in the heat accumulator tank 55. The first switching pipe 62 and the inflow pipe 51 are connected to each other at a location upstream of the circulation means 54.

A second switching pipe 63 branches off from the second fluid path-switching valve 61 and is connected to the inflow pipe 51. That is, the second switching pipe 63 is connected to the third heat exchanger 53 in parallel, and connected to the first switching pipe 62 in parallel, and fluid flows therethrough. The second switching pipe 63 and the inflow pipe 51 are connected to each other at a location upstream of the circulation means 54.

A temperature sensor 70 which detects fluid temperature is disposed on the first heat exchanger 22.

A control apparatus 4 inputs a signal from the temperature sensor 70, and controls the first fluid path-switching valve 60 and the second fluid path-switching valve 61.

The cold/hot water supply apparatus 10 has the heat-accumulation operation mode, the cooling operation mode and a heating operation mode. In the heat-accumulation operation mode, water in the heat accumulator tank 55 is heated by flowing fluid into the first switching pipe 62. In the cooling operation mode, heat in air is absorbed by flowing fluid into the third heat exchanger 53. In the heating operation mode, heat is dissipated to air by flowing fluid into the third heat exchanger 53.

The control apparatus 4 determines whether fluid which flows out of the first heat exchanger 22 should be made to flow to the second fluid path-switching valve 61 or the third heat exchanger 53 based on temperature of fluid detected by the temperature sensor 70 when the heat-accumulation operation mode is changed to the cooling operation mode. If temperature of fluid detected by the temperature sensor 70 is equal to or higher than predetermined temperature, fluid which flows out of the first heat exchanger 22 flows to the second switching pipe 63. If temperature of fluid detected by the temperature sensor 70 is lower than the predetermined temperature, the fluid which flows out of the first heat exchanger 22 flows to the third heat exchanger 53.

Operation and effect of the cold/hot water supply apparatus having the above-described configuration will be described.

In the heat-accumulation operation mode, high temperature fluid produced by the first heat exchanger 22 heats water in the heat accumulator tank 55. Fig. 1 shows, with arrows, a flow of the fluid in the heat-accumulation operation mode.

The first fluid path-switching valve 60 is switched by the control apparatus 4 such that fluid flows to the first switching pipe 62.

High pressure gas refrigerant discharged from the compressor 21 flows into the first heat exchanger 22 through the four-way valve 25, and heats fluid which flows through the first heat exchanger 22.

High pressure liquid refrigerant which flows out of the first heat exchanger 22 is decompressed and expanded by the expansion means 23 and then, the refrigerant flows into the second heat exchanger 24. Low pressure air-liquid two-phase refrigerant which flows into the second heat exchanger 24 absorbs vaporization heat from air and evaporates, and becomes low pressure two-phase refrigerant or overheated refrigerant and flows out of the second heat exchanger 24.

The low pressure refrigerant which flows out of the second heat exchanger 24 passes through the four-way valve 25, gas and liquid are separated from each other by the accumulator 26, and gas-phase refrigerant is sucked into the compressor 21.

By the above-described operation, high temperature fluid is produced by the first heat exchanger 22.

High temperature fluid produced by the first heat exchanger 22 flows through the outflow pipe 52, and flows into the first switching pipe 62 through the first fluid path-switching valve 60. The fluid heats water in the heat accumulator tank 55, flows through the inflow pipe 51 via the circulation means 54, and flows into the first heat exchanger 22 and circulates therethrough.

Fig. 2 shows, with arrows, a flow of fluid when the heat-accumulation operation mode is switched to the cooling operation mode.

Fluid which flows out of the first heat exchanger 22 flows to the second switching pipe 63 if fluid temperature Tw detected by the temperature sensor 70 is equal to or higher than predetermined temperature (switching temperature To, hereinafter) when the heat-accumulation operation mode is changed to the cooling operation mode. Therefore, the control apparatus 4 switches the first fluid path-switching valve 60 so that fluid flows to the outflow pipe 52, and switches the second fluid path-switching valve 61 so that the fluid flows to the second switching pipe 63.

High pressure refrigerant which is discharged out from the compressor 21 flows into the second heat exchanger 24 through the four-way valve 25, dissipates heat and condenses. High pressure liquid refrigerant which is cooled by the condensation flows out from the first heat exchanger 22.

High pressure liquid refrigerant which flows out of the second heat exchanger 24 is decompressed by the expansion means 23 and then flows into the first heat exchanger 22. The low pressure two-phase refrigerant which flows into the first heat exchanger 22 absorbs vaporization heat from fluid and evaporates, and becomes low pressure two-phase refrigerant or overheated refrigerant, and flows out of the first heat exchanger 22.

The low pressure refrigerant which flows out of the first heat exchanger 22 passes through the four-way valve 25 and gas and liquid are separated from each other by the accumulator 26 and then, gas-phase refrigerant is sucked into the compressor 21.

Low temperature fluid is produced in the first heat exchanger 22 by the above-described operation.

The low temperature fluid produced by the first heat exchanger 22 flows through the first fluid path-switching valve 60, and flows from the outflow pipe 52 into the second switching pipe 63 through the second fluid path-switching valve 61. Fluid flows to the inflow pipe 51, flows into the first heat exchanger 22 through the circulation means 54 and circulates therethrough.

Fig. 3 shows, with arrows, a flow of fluid in the cooling operation mode.

When the fluid temperature Tw detected by the temperature sensor 70 disposed in the first heat exchanger 22 is lower than the switching temperature To, fluid which flows out of the first heat exchanger 22 flows to the third heat exchanger 53. Therefore, the first fluid path-switching valve 60 is switched by the control apparatus 4 so that fluid flows to the outflow pipe 52, and the second fluid path-switching valve 61 is also switched by the control apparatus 4 so that fluid flows to the outflow pipe 52.

The refrigeration cycle apparatus 1 is driven by the operation shown in Fig. 2.

Here, in the case of an apparatus which carries out the cooling operation mode using cooled fluid, since the switching temperature To is set to about 20 degrees Celsius in many cases, the switching temperature To is set to 20 degrees Celsius in this embodiment also.

The control operation will be described below in detail using the flowchart shown in Fig. 4.

The control apparatus 4 controls the first fluid path-switching valve 60 and the second fluid path-switching valve 61 based on temperature detected by the temperature sensor 70.

First, the control apparatus 4 determines whether heat accumulation driving is requested (step 1). If the heat accumulation driving is not requested, the current state is maintained, and if the heat accumulation driving is requested, the first fluid path-switching valve 60 is switched to the first switching pipe 62, and the second fluid path-switching valve 61 is switched to the second switching pipe 63 (step 2).

High temperature fluid produced by the first heat exchanger 22 flows from the outflow pipe 52 into the first switching pipe 62 by the first fluid path-switching valve 60, and water in the heat accumulator tank 55 is heated.

The control apparatus 4 determines whether cooling driving is requested (step 3), and if the cooling driving is not requested, the current state is maintained, and if the cooling driving is requested, the first fluid path-switching valve 60 is switched from the first switching pipe 62 to the third heat exchanger 53 (step 4).

In step 2, since the second fluid path-switching valve 61 is switched so that fluid flows to the second switching pipe 63, fluid which flows out of the first heat exchanger 22 flows to the second switching pipe 63.

Next, the temperature sensor 70 detects the fluid temperature Tw (step 5), and the fluid temperature Tw and the switching temperature To are compared with each other (step6) .

When the fluid temperature Tw is equal to or higher than the switching temperature To, fluid which flows out of the first heat exchanger 22 flows to the second switching pipe 63. Therefore, the fluid is kept being cooled. When the fluid temperature Tw is equal to or higher than the switching temperature To, the procedure is returned to the detecting step of the fluid temperature Tw in step 5.

When the fluid temperature Tw is lower than the switching temperature To, it is determined that even if high temperature fluid dissipates heat to the indoor space through heat exchanger third heat exchanger 53, the possibility that the comfort in the indoor space is deteriorated is low, and the second fluid path-switching valve 61 is switched from the second switching pipe 63 to the third heat exchanger 53 (step 7). The control apparatus 4 continues the current state until the heat accumulation driving is requested (step 1).

In this embodiment, when the heat-accumulation operation mode is switched to the cooling operation mode, if the fluid temperature Tw detected by the temperature sensor 70 is equal to or higher than the switching temperature To, the second fluid path-switching valve 61 is switched to the second switching pipe 63. According to this, high temperature fluid in the fluid circuit 5 does not flow into the third heat exchanger 53, and it is possible to solve a heat dissipation phenomenon from high temperature fluid to the indoor space through the third heat exchanger 53 can be solved. Therefore, it is possible to suppress the temperature rise in the indoor space.

When the fluid temperature Tw detected by the temperature sensor 70 is lower than the switching temperature To, the second fluid path-switching valve 61 is switched from the second switching pipe 63 to the third heat exchanger 53. According to this, fluid whose temperature is lower than the switching temperature To flows into the third heat exchanger 53, and it is possible to cool the indoor space immediately after the heat-accumulation operation mode is switched to the cooling operation mode.

### (Second Embodiment)

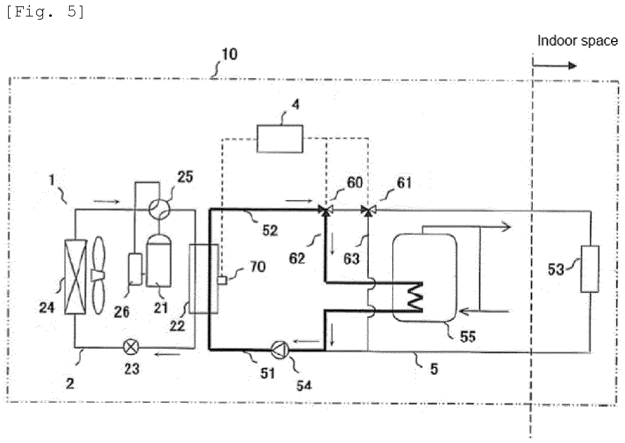

Fig. 5 shows a cold/hot water supply apparatus according to a second embodiment of the present invention. In the second embodiment, the same constituent parts as those of the first embodiment are designated with the same symbols, and explanation thereof will be omitted.

The basic configuration and operation of the second embodiment are the same as those of the first embodiment, but an air temperature sensor 71 is provided in the second embodiment. That is, the air temperature sensor 71 is provided for detecting air temperature in the indoor space of the first embodiment.

Since the air temperature sensor 71 is provided, the switching temperature To is set equal to detection temperature Ta of the air temperature sensor 71 disposed in the indoor space. The switching temperature To can be set lower than detection temperature Ta of the air temperature sensor 71 by several degrees, or can be set higher than the detection temperature Ta by several degrees.

In this case, the switching temperature To of the fluid is set based on the air temperature in the indoor space. Therefore, , if the air temperature in the indoor space is high as compared with the switching temperature To shown in the first embodiment is 20 degrees Celsius, the second fluid path-switching valve 61 is switched from the second switching pipe 63 to the third heat exchanger 53 when the switching temperature To becomes equal to the detection temperature Ta of the air temperature in the room or equal to a value near the detection temperature Ta. Therefore, it is possible to switch from the cooling-standby operation to the cooling operation mode at an earlier stage than that of the first embodiment (step 7 in Fig. 4).

As a result, as compared with the case of the first embodiment, the cooling-standby time during which fluid flows through the second switching pipe 63 can be shortened. Therefore, the energy efficiency can be enhanced.

In Figs. 1 to 3 and 5, a branch point from the fluid circuit 5 to the second switching pipe 63 is located between the first fluid path-switching valve 60 and the third heat exchanger 53, but it may be located between the first heat exchanger 22 and the first fluid path-switching valve 60.

### [Industrial Applicability]

According to the cold/hot water supply apparatus of the present invention, when the heat-accumulation operation mode is switched to the cooling operation mode, if the fluid temperature is lower than the predetermined temperature, the second fluid path-switching valve is switched. According to this, since fluid whose temperature is lower than the predetermined temperature flows into the third heat exchanger, it is possible to suppress deterioration of comfort in an indoor space in the case of the cooling operation mode. Therefore, the present invention can be applied also to a cold water hot water supply apparatus and heating apparatus which heats fluid and utilizes the fluid for heating an indoor space.

## Claims

1. A cold/hot water supply apparatus (10) comprising:
a refrigerant circuit (2) including a compressor (21), a first heat exchanger (22), expansion means (23) and a second heat exchanger (24) which are annularly connected to one another and through which refrigerant flows;
a fluid circuit (5) including the first heat exchanger (22) and a third heat exchanger (53) which are annularly connected to each other and through which fluid flows;
a heat accumulator tank (55) in which water is stored;
a first switching pipe (62) which is connected to the fluid flows in parallel with the third heat exchanger (53), and which exchanges heat between the fluid and water in the heat accumulator tank (55); and
a control apparatus (4) which switches between a flow of the fluid to the third heat exchanger (53) and a flow of the fluid to the heat accumulator tank (55); in which
the cold/hot water supply apparatus (10) has a heat-accumulation operation mode and a cooling operation mode, in the heat-accumulation operation mode, the fluid flows to the first switching pipe (62), thereby heating the water in the heat accumulator tank (55), and in the cooling operation mode, the fluid flows to the third heat exchanger (53), thereby absorbing heat in air, wherein
the cold/hot water supply apparatus (10) also includes: a temperature sensor (70) which detects temperature of the fluid;
**characterized by**
a second switching pipe (63) which is connected to the third heat exchanger (53) in parallel and which is connected to the first switching pipe (62) in parallel, the fluid flowing through the second switching pipe (63); and
when the heat-accumulation operation mode is changed to the cooling operation mode, the control apparatus (4) is configured to determine whether the fluid which flows out of the first heat exchanger (22) should be made to flow to the second switching pipe (63) or to the third heat exchanger (53) based on temperature of the fluid detected by the temperature sensor (70).

2. The cold/hot water supply apparatus (10) according to claim 1, wherein the control apparatus (4) is configured to receive a signal from the temperature sensor (70) and further configured to control the flow of the fluid which flows out of the first heat exchanger (22) based on the signal from the temperature sensor (70), such that when the heat-accumulation operation mode is changed to the cooling operation mode, if temperature of the fluid detected by the temperature sensor (70) is equal to or higher than predetermined temperature, the control apparatus (4) performs control such that the fluid which flows from the first heat exchanger (22) flows to the second switching pipe (63),

3. The cold/hot water supply apparatus (10) according to claim 1, wherein the control apparatus (4) is configured to receive a signal from the temperature sensor (70) and further configured to control the flow of the fluid which flows out of the first heat exchanger (22) based on the signal from the temperature sensor (70), such that when the heat-accumulation operation mode is changed to the cooling operation mode, if temperature of the fluid detected by the temperature sensor (70) is lower than predetermined temperature, the control apparatus (4) performs control such that the fluid which flows from the first heat exchanger (22) flows to the third heat exchanger (53).

4. The cold/hot water supply apparatus (10) according to claim 2 or 3, further comprising an air temperature sensor (71) which detects air temperature in an indoor space where the third heat exchanger is disposed, wherein the predetermined temperature is set based on temperature detected by the air temperature sensor (71).

## Patentansprüche

1. Kalt-/Heißwasser-Versorgungs-Vorrichtung (10), umfassend:
einen Kältemittelkreislauf (2), umfassend einen Kompressor (21), einen ersten Wärmetauscher (22), Expansionsmittel (23) und einen zweiten Wärmetauscher (24), die ringförmig miteinander verbunden sind und durch die Kältemittel fließt;
einen Fluid-Kreislauf (5), umfassend einen ersten Wärmetauscher (22) und einen dritten Wärmetauscher (53), die ringförmig miteinander verbunden sind und durch die Fluid fließt;
einen Wärmespeichertank (55), in dem Wasser gespeichert ist;
ein erstes Umschaltrohr (62), das parallel zum dritten Wärmetauscher (53) mit den Fluid-Flüssen verbunden ist, und das Wärme zwischen dem Fluid und Wasser im Wärmespeichertank (55) austauscht; und
eine Steuerungsvorrichtung (4), die zwischen dem Fluss des Fluids zum dritten Wärmetauscher (53) und einem Fluss des Fluids zum Wärmespeichertank (55) umschaltet; wobei
die Kalt-/Heißwasser-Versorgungs-Vorrichtung (10) eine Wärmespeicherungs-Betriebsart und eine Kühlungs-Betriebsart aufweist, in der Wärmespeicherungs-Betriebsart fließt das Fluid zum ersten Umschaltrohr (62) wodurch das Wasser im Wärmespeichertank (55) aufgeheizt wird, und in der Kühlungs-Betriebsart fließt das Fluid zum dritten Wärmetauscher (53), wodurch Wärme in der Luft absorbiert wird, wobei
die Kalt-/Heißwasser-Versorgungs-Vorrichtung (10) auch umfasst: einen Temperatursensor (70), der die Temperatur des Fluids misst;
**gekennzeichnet durch** ein zweites Umschaltrohr (63), das parallel zum dritten Wärmetauscher (53) verbunden ist und das parallel mit dem ersten Umschaltrohr (62) verbunden ist, wobei das Fluid **durch** das zweite Umschaltrohr (63) fließt; und
wenn die Wärmespeicherungs-Betriebsart zur Kühlungs-Betriebsart gewechselt wird, ist die Steuerungsvorrichtung (4) gestaltet, festzustellen, ob das Fluid, das aus dem ersten Wärmetauscher (22) fließt, zum zweiten Umschaltrohr (63) oder zum dritten Wärmetauscher (53) fließen gelassen werden soll, was auf der Temperatur des Fluids beruht, die vom Temperatursensor (70) gemessen wird.

2. Kalt-/Heißwasser-Versorgungs-Vorrichtung (10) nach Anspruch 1, wobei die Steuerungsvorrichtung (4) gestaltet ist, ein Signal vom Temperatursensor (70) zu empfangen, und ferner gestaltet ist, basierend auf dem Signal vom Temperatursensor (70) den Fluss des Fluids zu steuern, das aus dem ersten Wärmetauscher (22) fließt, so dass wenn die Wärmespeicherungs-Betriebsart zur Kühlungs-Betriebsart gewechselt wird, wenn die vom Temperatursensor (70) gemessene Temperatur des Fluids gleich oder höher ist als eine vorgegebene Temperatur, die Steuerungsvorrichtung (4) die Steuerung so durchführt, dass das Fluid, das aus dem ersten Wärmetauscher (22) fließt, zum zweiten Umschaltrohr (63) fließt.

3. Kalt-/Heißwasser-Versorgungs-Vorrichtung (10) nach Anspruch 1, wobei die Steuerungsvorrichtung (4) gestaltet ist, ein Signal vom Temperatursensor (70) zu empfangen, und ferner gestaltet ist, basierend auf dem Signal vom Temperatursensor (70) den Fluss des Fluids zu steuern, das aus dem ersten Wärmetauscher (22) fließt, so dass wenn die Wärmespeicherungs-Betriebsart zur Kühlungs-Betriebsart gewechselt wird, wenn die vom Temperatursensor (70) gemessene Temperatur des Fluids kleiner als die vorgegebene Temperatur ist, die Steuerungsvorrichtung (4) die Steuerung so durchführt, dass das Fluid, das aus dem ersten Wärmetauscher (22) fließt, zum dritten Wärmetauscher (53) fließt.

4. Kalt-/Heißwasser-Versorgungs-Vorrichtung (10) nach Anspruch 2 oder 3, ferner umfassend einen Lufttemperatursensor (71), der die Lufttemperatur in einem Innenraum misst, in dem der dritte Wärmetauscher angeordnet ist, wobei die vorgegebene Temperatur auf der Grundlage der vom Lufttemperatursensor (71) gemessenen Temperatur eingestellt wird.

## Revendications

1. Appareil (10) d'alimentation en eau froide/chaude, comprenant:
un circuit (2) de réfrigérant comprenant un compresseur (21), un premier échangeur de chaleur (22), un moyen de détente (23) et un second échangeur de chaleur (24), qui sont connectés de manière annulaire l'un à l'autre et à travers lesquels circule le réfrigérant;
un circuit (5) de fluide comprenant le premier échangeur de chaleur (22) et un troisième échangeur de chaleur (53), qui sont connectés de manière annulaire l'un à l'autre et à travers lesquels circule le fluide;
un réservoir (55) accumulateur de chaleur, dans lequel est emmagasiné de l'eau;
un premier tube de déviation (62) qui est connecté avec les flux de fluide en parallèle avec le troisième échangeur de chaleur (53), et qui échange la chaleur entre le fluide et l'eau dans le réservoir (55) accumulateur de chaleur; et
un appareil de commande (4) qui effectue une commutation entre un flux de fluide vers le troisième échangeur de chaleur (53) et un flux de fluide ver le réservoir (55) accumulateur de chaleur; dans lequel
l'appareil (10) d'alimentation en eau froide/chaude possède un mode de fonctionnement d'accumulation de chaleur et un mode de fonctionnement de refroidissement, dans le mode de fonctionnement d'accumulation de chaleur, le fluide circule vers le premier tube de dérivation (62), chauffant de ce fait l'eau dans le réservoir (55) d'accumulation de chaleur, et dans le mode de fonctionnement de refroidissement, le fluide circule vers le troisième échangeur de chaleur (53), absorbant ainsi la chaleur dans l'air, dans lequel
l'appareil (10) d'alimentation en eau froide/chaude comprend également: un capteur de température (70), qui détecte la température du fluide;
**caractérisé par** un second tube de dérivation (63), qui est connecté en parallèle au troisième échangeur de chaleur (53) et qui est connecté en parallèle au premier tube de dérivation (62), le fluide circulant à travers le second tube de dérivation (63); et
lorsque le mode de fonction d'accumulation de chaleur est changé en mode de refroidissement, l'appareil de commande (4) est configuré pour déterminer si le fluide qui circule depuis le premier échangeur de chaleur (22) devrait être amené à circuler vers le second tube de dérivation (63) ou vers le troisième échangeur de chaleur (53), ceci sur la base de la température de fluide détectée par le capteur de température (70).

2. Appareil (10) d'alimentation en eau froide/chaude selon la revendication 1, dans lequel l'appareil de commande (4) est configuré pour recevoir une signal depuis le capteur de température (70) et configuré en outre pour piloter le flux de fluide qui circule depuis le premier échangeur de chaleur (22) sur la base du signal provenant du capteur de température (70), de sorte que, lorsque le mode de fonctionnement d'accumulation de chaleur est changé en mode de fonctionnement de refroidissement, si la température de fluide détectée par le capteur de température (70) est égale ou supérieure à une température prédéterminée, l'appareil de commande (4) exécute le pilotage de sorte que le fluide qui circule depuis le premier échangeur de chaleur (22) circule vers le second tube de dérivation (63).

3. Appareil (10) d'alimentation en eau froide/chaude selon la revendication 1, dans lequel l'appareil de commande (4) est configuré pour recevoir une signal depuis le capteur de température (70) et configuré en outre pour piloter le flux de fluide qui circule depuis le premier échangeur de chaleur (22) sur la base du signal provenant du capteur de température (70), de sorte que, lorsque le mode de fonctionnement d'accumulation de chaleur est changé en mode de fonctionnement de refroidissement, si la température de fluide détectée par le capteur de température (70) est inférieure à une température prédéterminée, l'appareil de commande (4) exécute le pilotage de sorte que le fluide qui circule depuis le premier échangeur de chaleur (22) circule vers le troisième échangeur de chaleur (53).

4. Appareil (10) d'alimentation en eau froide/chaude selon la revendication 2 ou 3, comprenant en outre un capteur (71) de température de l'air, qui détecte la température de l'air dans un espace intérieur dans lequel est disposé le troisième échangeur de chaleur, sachant que la température prédéterminée est définie sur la base de la température détectée par le capteur (71) de température de l'air.
